(19) Europäisches Patentamt
European Patent Office
Office européen des brevets

(11) Veröffentlichungsnummer : **0 015 872**
**B1**

(12) # EUROPÄISCHE PATENTSCHRIFT

(45) Veröffentlichungstag der Patentschrift : **30.03.83**

(51) Int. Cl.³ : **C 09 B 44/10**, D 06 P 1/41

(21) Anmeldenummer : **80810064.8**

(22) Anmeldetag : **22.02.80**

(54) **Kationische Azofarbstoffe, deren Herstellung und Verwendung beim Färben und Bedrucken von Textilmaterial.**

(30) Priorität : **28.02.79 CH 1982/79**

(43) Veröffentlichungstag der Anmeldung : **17.09.80 Patentblatt 80/19**

(45) Bekanntmachung des Hinweises auf die Patenterteilung : **30.03.83 Patentblatt 83/13**

(84) Benannte Vertragsstaaten : **CH DE FR GB**

(56) Entgegenhaltungen :
**DE A 2 001 705**
**FR A 2 393 030**
**US A 3 585 182**

(73) Patentinhaber : **CIBA-GEIGY AG**
**Patentabteilung Postfach**
**CH-4002 Basel (CH)**

(72) Erfinder : **Zink, Rudolf**
**Alemannenstrasse 2**
**CH-4106 Therwil (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 015 872 B1

Kationische Azofarbstoffe, deren Herstellung und Verwendung beim Färben und Bedrucken von Textilmaterial

Die Erfindung betrifft neue kationische Azoverbindungen, Verfahren zu deren Herstellung und deren Verwendung als Farbstoffe zum Färben und/oder Bedrucken von Polyacrylnitrilmaterialien oder sauer modifizierten Polyamid- und Polyestermaterialien.

Die neuen kationischen Azoverbindungen entsprechen der Formel (I)

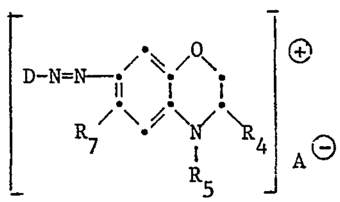

(I)

worin bedeuten :

D einen quaternierten gegebenenfalls durch $C_1$-$C_4$-Alkyl, $C_1$-$C_4$-Alkoxy oder Phenyl substituierten Pyrazol-, 1,2,4-Triazol-, Indazol-, Thiazol-, Benzothiazol- oder 1,2,4-Thiadiazolring,

$R_4$ Wasserstoff, $CH_3$, $C_2H_5$ oder Phenyl,

$R_5$ Wasserstoff, $CH_3$, $C_2H_5$, $CH_2$ 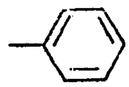 , $C_2H_4CN$ oder $C_2H_4OH$,

$R_7$ Wasserstoff oder eine Alkylgruppe mit 1 bis 4 Kohlenstoffatomen und

A ein Anion.

Bedeutet $R_7$ eine Alkylgruppe mit 1 bis 4 Kohlenstoffatomen, so handelt es sich um eine unverzweigte oder verzweigte Alkylgruppe, wie die Methyl-, Aethyl-, n- und iso-Propyl-, n- und iso-Butylgruppe.

Sind die Reste D durch $C_1$-$C_4$-Alkyl oder $C_1$-$C_4$-Alkoxy weitersubstituiert, so handelt es sich z. B. um unsubstituierte unverzweigte oder verzweigte Gruppen, beispielsweise um die Methyl-, Aethyl-, n- und iso-Propyl- oder n- und iso-Butylgruppe, oder um die Methoxy-, Aethoxy-, Propoxy- und Butoxygruppe.

« A » in der Bedeutung eines Anions stellt sowohl organische wie anorganische Ionen dar, z. B. Halogen, wie Chlorid-, Bromid- oder Jodid-, Rhodanid-, Sulfat-, Methylsulfat-, Aethylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Formiat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Die erfindungsgemässen Azoverbindungen besitzen eine gute Löslichkeit in Wasser bei 20 °C und teilweise ein gutes Migriervermögen.

Die Herstellung der erfindungsgemässen kationischen Azoverbindungen der Formel I erfolgt beispielsweise derart, dass man eine Diazokomponente II

$$D'—NH_2$$

auf eine Kupplungskomponente III

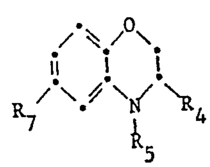

kuppelt, worin die Symbole $R_4$, $R_5$ und $R_7$ die unter Formel I angegebene Bedeutung haben, und D' den nicht quaternierten, definitionsgemässen heterocyclischen Rest D darstellt, und das Kupplungsprodukt anschliessend quaterniert.

Die Diazokomponenten der Formel II sind bekannt und können nach bekannten Methoden hergestellt werden. Genannt sind z. B. : 3-Amino-pyrazol, 3-Amino-5-methylpyrazol, 3-Amino-5-äthylpyrazol, 2-Isopropyl-3-aminopyrazol, 2-Phenyl-3-aminopyrazol, 2-Phenyl-3-amino-5-methylpyrazol, 2-Phenyl-3-amino-4,5-dimethyl-pyrazol, 3-Amino-1,2,4-triazol, 3-Amino-5-methyl-1,2,4-triazol, 3-Amino-5-phenyl-1,2,4-triazol, 3-Amino-indazol, 2-Amino-6-methoxybenzthiazol, 2-Aminothiazol, 2-Amino-4-phenylthiazol, 2-Amino-benzthiazol, 2-Amino-6-methyl-benzthiazol, 5-Amino-3-methyl-1,2,4-thiadiazol und 5-Amino-3-phenyl-1,2,4-thiadiazol.

Bekannt (z. B. aus den Chem. Berichten *30,* Seite 1634 ff oder *55,* Seite 3821, oder aus dem Chem.

Zentralblatt 1898/II, Seite 525, sowie US-PS 2 448 869) sind ebenfalls die Kupplungskomponenten III, die ebenfalls nach bekannter Art und Weise hergestellt werden können. Genannt sind aus der grossen Auswahl z. B. 3-Phenyl-N-methyl-benzomorpholin, Benzomorpholin, 3-Methyl-benzomorpholin, N-Methyl-benzomorpholin, N-Aethyl-benzomorpholin, 6-Methyl-benzomorpholin, 3-Methyl-N-methyl-benzomorpholin, 3-Methyl-N-äthyl-benzomorpholin, 3-Methyl-N-benzylmorpholin, 3,6-Dimethyl-N-methylbenzomorpholin, 3-Phenyl-benzomorpholin, 3-Phenyl-N-methyl-benzomorpholin, 3-Phenyl-N-äthyl-benzomorpholin, 3-Phenyl-N-benzyl-benzomorpholin, 3-Phenyl-N-methyl-6-methyl-benzomorpholin, 3-Methyl-N-β-hydroxyäthyl-benzomorpholin, 3-Phenyl-N-β-hydroxyäthyl-benzomorpholin, 3-Methyl-N-β-hydroxyäthyl-6-methyl-benzomorpholin, 3-Methyl-N-β-cyanäthyl-benzomorpholin und 3-Phenyl-N-β-cyanäthyl-benzomorpholin.

Die Kupplungsreaktion wird nach bekannter Art und Weise durchgeführt, z. B. indem man die Diazokomponente II diazotiert und auf die Kupplungskomponente III, vorteilhaft bei Temperaturen unter 10 °C, z. B. in Eisessig, kuppelt.

Anschliessend an die Kupplungsreaktion erfolgt gegebenenfalls eine Alkylierung und die Quaternisierung ; beide Reaktionen nach bekannter Art und Weise ; diese kann z. B. in einem inerten Lösungsmittel, wie Chlorbenzol, gegebenenfalls in Gegenwart einer anorganischen Base, oder gegebenenfalls in wässeriger Suspension, oder ohne Lösungsmittel, in einem Ueberschuss des Quaternisierungsmittels bei einer Temperatur von ca. 20° bis 120 °C erfolgen.

Geeignete Quaternisierungsmittel resp. Alkylierungsmittel sind z. B. Alkylhalogenide, wie Methyl- oder Aethylchlorid, Methyl-, Aethyl- oder Butylbromid oder Methyl- oder Aethyljodid, vor allem jedoch Alkylsulfate, wie Dimethyl-, Diäthyl- und Dibutylsulfat, Benzylchlorid, Chloressigsäureamid, Acylsäureester, Epoxyde, wie Aethylenoxyd, Epichlorhydrin und Alkylester von aromatischen Sulfonsäuren, wie Methyl-p-toluolsulfonat, Methylbenzolsulfonat, sowie die Propyl- und Butylester von Benzolsulfonsäure.

Nach der Quaternisierung werden die neuen kationischen Azoverbindungen vom Reaktionsmedium getrennt und getrocknet. Falls gewünscht oder erforderlich, ist es möglich, in den Verbindungen der Formel I das Anion A gegen ein anderes Anion auszutauschen.

Verwendung finden die neuen kationischen Azoverbindungen der Formel I als Farbstoffe zum Färben und unter Zusatz von Binde- und Lösungsmitteln zum Bedrucken von mit kationischen Farbstoffen anfärbbaren Materialien, insbesondere Textilmaterialien, die z. B. aus Homo- oder Mischpolymerisaten des Acrylnitrils bestehen, oder synthetische Polyamide oder Polyester, welche durch saure Gruppen modifiziert sind. Desweiteren dienen die neuen kationischen Farbstoffe auch zum Färben von Nasskabel, Kunststoffmassen, Leder und Papier. Man färbt vorzugsweise aus wässerigem neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware, wie Hemden, Pullover.

Schliesslich können die neuen Verbindungen der Formel I, vor allem diejenigen, worin $R_5$ Wasserstoff bedeutet, noch im Transferdruck eingesetzt werden.

Durch die Applikation der Farbstoffe lassen sich sehr brillante, farbstarke orange bis blaue Färbungen bzw. Drucke herstellen, die sich durch sehr gute Allgemeinechtheiten, wie Licht-, Dekatur-, Wasch- und Schweissechtheit auszeichnen.

Aus der US-A-3 585 182 sind ähnliche Monoazofarbstoffe mit einem Benzomorpholinrest bekannt, welche aber im Gegensatz zu den anmeldungsgemässen Farbstoffen am N-Atom des Benzomorpholinrestes eine Vinylsulfonyläthylgruppe aufweisen. Diese bekannten Farbstoffe weisen gegenüber den anmeldungsgemässen Farbstoffen eine schlechtere Brillanz und Wollreserve auf.

In den folgenden Beispielen bedeuten die Teile (T) Gewichtsteile, die Prozente Gewichtsprozente und die Temperaturen sind in Celsiusgraden angegeben.

Beispiel 1

4,85 T 3-Amino-5-methylpyrazol werden in 50 T Wasser und 15 T wässeriger Salzsäure 30 % gelöst. Bei 0-5° diazotiert man durch Zutropfen von 12,5 T Natriumnitrit 4 N. Diese Diazolösung tropft man innert 30 Minuten zu einer Lösung aus 11,25 T 3-Phenyl-N-methyl-benzomorpholin in 20 T Eisessig bei maximal 10°. Der Farbstoff kristallisiert beim Rühren über Nacht aus, wird dann abfiltriert und zur Neutralisation in Sodalösung wieder angeschlämmt und nochmals filtriert. Nach der Trocknung erhält man 13,2 T eines gelb-orangen Farbstoffes, welcher in 100 T Wasser und 40 T Dimethylsulfat, angeschlämmt, durch Zutropfen von 40 T wässeriger Natronlauge 30 % in 2-3 Stunden bei pH 4-7 und 40-45° vollständig methyliert und quaterniert wird. Das Farbsalz der Formel

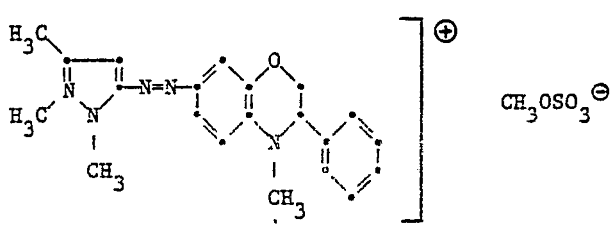

fällt aus und wird abfiltriert. Zwecks Reinigung wird dieses nochmals in verdünnter Essigsäure gelöst, klärfiltriert und durch Zugabe von Kochsalz als Chlorid gefällt. Nach Filtration und Trocknung erhält man 17,2 T eines gelbstichig-roten Farbstoffes, welcher sich hervorragend zum Färben von Polyacrylnitril eignet.

Bei sonst gleicher Arbeitsweise, aber bei entsprechender Abänderung der Ausgangsmaterialien nach Tabelle I erhält man weitere wertvolle kationische Farbstoffe.

(Siehe die Tabellen, Seiten 5, 6 und 7)

Tabelle I

| Beispiel Nr. | Diazokomponente 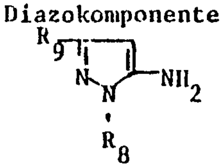 | | Kupplungskomponente 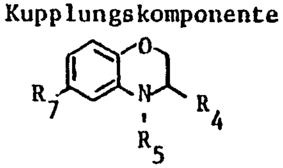 | | | Quarternierungsmittel | Nuance auf Polyacrylnitril |
|---|---|---|---|---|---|---|---|
| | $R_8$ | $R_9$ | $R_4$ | $R_5$ | $R_7$ | | |
| 2 | H | H | H | H | H | $(CH_3O)_2\ SO_2$ | gelbstichig-rot |
| 3 | " | " | $CH_3$ | " | " | " | " |
| 4 | " | " | " | $CH_3$ | " | " | " |
| 5 | " | " | " | " | $CH_3$ | " | rot |
| 6 | " | " | " | " | " | $(C_2H_5O)_2\ SO_2$ | " |
| 7 | " | " | 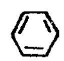 | H | H | $(CH_3O)_2\ SO_2$ | gelbstichig-rot |
| 8 | " | " | 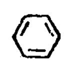 | $CH_3$ | " | " | " |
| 9 | " | " | 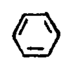 | $C_2H_5$ | " | " | " |
| 10 | " | " | 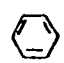 | $CH_2$- 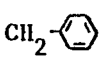 | " | " | " |
| 11 | " | " | 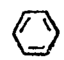 | $CH_3$ | $CH_3$ | " | rot |
| 12 | " | " | $CH_3$ | $C_2H_4OH$ | " | " | " |

Tabelle I (Fortsetzung 1)

| Beispiel Nr. | Diazokomponente 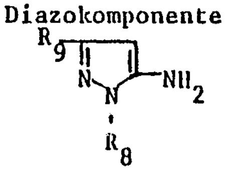 | | Kupplungskomponente 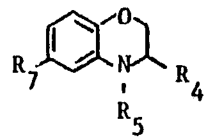 | | | Quarternierungs-mittel | Nuance auf Polyacrylnitril |
|---|---|---|---|---|---|---|---|
| | $R_8$ | $R_9$ | $R_4$ | $R_5$ | $R_7$ | | |
| 13 | $CH_3$ | H | $CH_3$ | $CH_3$ | H | $(CH_3O)_2\ SO_2$ | rot |
| 14 | H | $CH_3$ | " | " | " | " | " |
| 15 | " | " | " | " | $CH_3$ | " | rot |
| 16 | " | " | " | H | H | " | gelbstichig-rot |
| 17 | " | " | " | " | $CH_3$ | " | " |
| 18 | " | " | 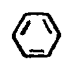 | " | " | " | " |
| 19 | " | " | " | $C_2H_5$ | H | " | rot |
| 20 | " | " | " | $CH_3$ | " | $(C_2H_5O)_2\ SO_2$ | " |
| 21 | " | " | $CH_3$ | $CH_2$-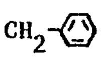 | " | $(CH_3O)_2\ SO_2$ | " |
| 22 | " | " | " | " | $CH_3$ | " | " |
| 23 | " | " | 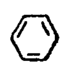 | $C_2H_4CN$ | H | " | gelbstichig-rot |

Tabelle I (Fortsetzung 2)

| Beispiel Nr. | Diazokomponente 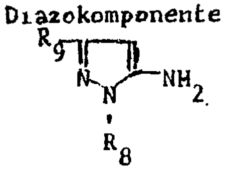 | | Kupplungskomponente 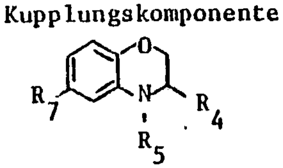 | | | Quarternierungs-mittel | Nuance auf Polyacrylnitril |
|---|---|---|---|---|---|---|---|
| | $R_8$ | $R_9$ | $R_4$ | $R_5$ | $R_7$ | | |
| 24 | $C_2H_5$ | $CH_3$ | $CH_3$ | $CH_3$ | H | $(CH_3O)_2\ SO_2$ | rot |
| 25 | " | " | 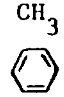 | " | " | " | " |
| 26 | " | " | " | " | $CH_3$ | " | rot |
| 27 | $CH(CH_3)_2$ | " | $CH_3$ | $CH_3$ | H | " | rot |

Beispiel 28

4,2 T 3-Amino-1,2,4-triazol werden in 200 T Wasser mit 10 T wässeriger Salzsäure 30 % gelöst und bei 0-5° mit 12,5 T 4-N Natriumnitrit diazotiert. Diese Diazolösung tropft man innert 30 Minuten zu einer Lösung von 11,25 T 3-Phenyl-N-methyl-benzomorpholin in 50 T Methyläthylketon und etwas Eis.

Mit Natriumacetat stellt man auf pH 4 und extrahiert den Farbstoff durch Zugabe von Essigsäureäthylester. Das Lösungsmittel wird nach Abtrennung der Wasserphase abdestilliert, wobei 15 T eines orangen Farbstoffes zurückbleiben. Man löst 8 T davon in 50 T Dichloräthan bei 60°, gibt 1,2 T Magnesiumoxid zu und versetzt mit 6,3 T Dimethylsulfat. Man hält 20 Minuten bei 65-68° ; versetzt dann mit 300 T 1-N Essigsäure und trennt die Wasserphase ab. Durch Zugabe von Kochsalz fällt das Farbsalz der Formel

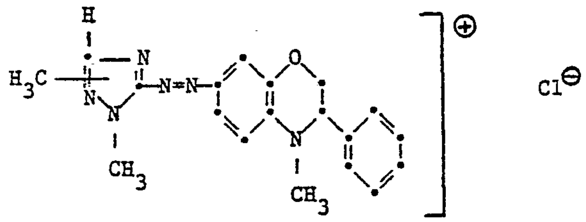

aus, das abgenutscht und getrocknet wird. Man erhält 8,8 T eines gut löslichen Farbstoffes, welcher Polyacrylnitrilfasern in reinen, blaustichig-roten Tönen mit hervorragenden Echtheiten färbt.

Diazotiert man die in folgender Tabelle II aufgeführten Diazokomponenten je nach bekannter Art und Weise, kuppelt und quaterniert mit den Kupplungskomponenten der Kolonne 3 bzw. Quaternisierungsmittel der Kolonne 4 auf analoge Art wie im Beispiel 28 angegeben, so erhält man weitere erfindungsgemässe Farbstoffe mit hervorragenden Echtheiten auf Polyacrylnitrilmaterialien.

(Siehe die Tabellen, Seiten 9, 10, 11, 12, 13 und 14)

Tabelle II

| Beispiel Nr. | Diazokomponente | Kupplungskomponente 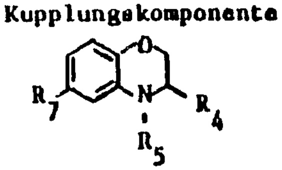 | | | Quarternierungsmittel | Nuance auf Polyacrylnitril |
|---|---|---|---|---|---|---|
| | | $R_4$ | $R_5$ | $R_7$ | | |
| 29 | 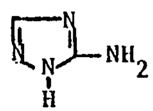 | H | H | H | $(CH_3O)_2\ SO_2$ | rot |
| 30 | " | $CH_3$ | " | " | " | " |
| 31 | " | " | $CH_3$ | " | " | blaustichig-rot |
| 32 | " | " | " | $CH_3$ | " | " |
| 33 | " | " | " | " | $(C_2H_5O)_2\ SO_2$ | " |
| 34 | " | " | $C_2H_5$ | H | $(CH_3O)_2\ SO_2$ | " |
| 35 | " | " | $CH_2$- 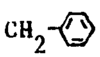 | " | " | " |
| 36 | " | " | $C_2H_4OH$ | " | " | " |
| 37 | " | " | $C_2H_4CN$ | " | " | " |
| 38 | " | H | $CH_3$ | " | " | " |
| 39 | " | 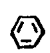 | H | " | " | rot |
| 40 | " | " | $CH_3$ | $CH_3$ | " | blaustichig-rot |

Tabelle II (Fortsetzung 1)

| Beispiel Nr. | Diazokomponente | Kupplungskomponente 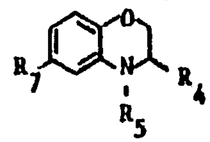 | | | Quarternierungs-mittel | Nuance auf Polyacrylnitril |
|---|---|---|---|---|---|---|
| | | $R_4$ | $R_5$ | $R_7$ | | |
| 41 | 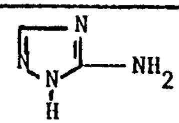 | 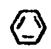 | $C_2H_5$ | H | $(CH_3O)_2\ SO_2$ | blaustichig-rot |
| 42 | 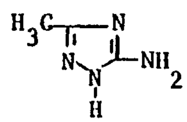 | " | " | H | " | " |
| 43 | " | " | " | $CH_3$ | " | " |
| 44 | " | 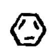 | " | H | $(C_2H_5O)_2\ SO_2$ | " |
| 45 | " | " | H | " | " | rot |
| 46 | 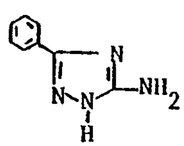 | $CH_3$ | " | " | $(CH_3O)_2\ SO_2$ | " |

Tabelle II (Fortsetzung 2)

| Beispiel Nr. | Diazokomponente | Kupplungskomponente 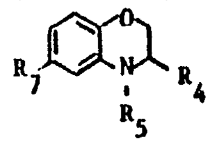 | | | Quarternierungsmittel | Nuance auf Polyacrylnitril |
|---|---|---|---|---|---|---|
| | | $R_4$ | $R_5$ | $R_7$ | | |
| 47 | 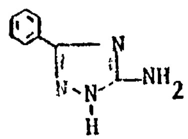 | $CH_3$ | $CH_3$ | H | $(CH_3O)_2\ SO_2$ | blaustichig-rot |
| 48 | " | " | " | $CH_3$ | " | " |
| 49 | " | " | $C_2H_5$ | H | " | " |
| 50 | " | " | $C_2H_4OH$ | " | " | " |
| 51 | 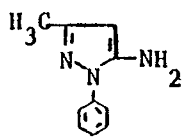 | " | H | H | " | rot |
| 52 | " | " | $CH_3$ | " | " | blaustichig-rot |
| 53 | " | " | " | $CH_3$ | " | " |
| 54 | " | " | $C_2H_5$ | H | " | " |
| 55 | " | " | $C_2H_4OH$ | " | " | " |
| 56 | " | " | $C_2H_5$ | $CH_3$ | " | " |

Tabelle II (Fortsetzung 3)

| Beispiel Nr. | Diazokomponente | Kupplungskomponente 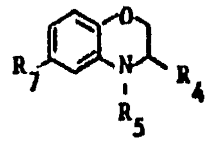 | | | Quarternierungs-mittel | Nuance auf Polyacrylnitril |
|---|---|---|---|---|---|---|
| | | $R_4$ | $R_5$ | $R_7$ | | |
| 57 | 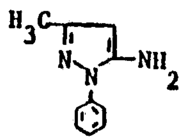 | $CH_3$ | $CH_2$- 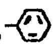 | $CH_3$ | $(CH_3O)_2\ SO_2$ | blaustichig-rot |
| 58 | " | " | $CH_3$ | H | $(C_2H_5O)_2\ SO_2$ | " |
| 59 | " | 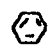 | H | " | $(CH_3O)_2\ SO_2$ | rot |
| 60 | " | " | $CH_3$ | " | " | blaustichig-rot |
| 61 | " | " | $CH_3$ | $CH_3$ | " | " |
| 62 | " | " | $C_2H_4OH$ | " | " | " |
| 63 | 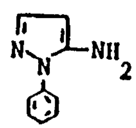 | $CH_3$ | $CH_3$ | H | " | " |
| 64 | " | " | $C_2H_5$ | " | " | " |
| 65 | " | " | $C_2H_4OH$ | " | " | " |
| 66 | " | " | $CH_2$- 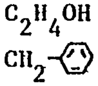 | " | " | " |

Tabelle II (Fortsetzung 4)

| Beispiel Nr. | Diazokomponente | Kupplungskomponente 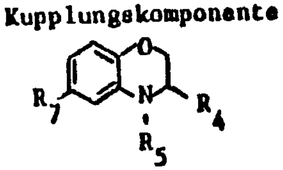 | | | Quarternierungs-mittel | Nuance auf Polyacrylnitril |
|---|---|---|---|---|---|---|
| | | $R_4$ | $R_5$ | $R_7$ | | |
| 67 | 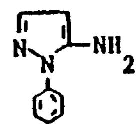 | $CH_3$ | $CH_3$ | $CH_3$ | $(CH_3O)_2$ $SO_2$ | blaustichig-rot |
| 68 | " | " | $C_2H_5$ | " | " | " |
| 69 | " | 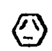 | H | H | " | rot |
| 70 | " | " | " | $CH_3$ | " | " |
| 71 | " | " | $CH_3$ | " | " | blaustichig-rot |
| 72 | " | " | $C_2H_5$ | " | " | " |
| 73 | " | " | $C_2H_4OH$ | H | " | " |
| 74 | 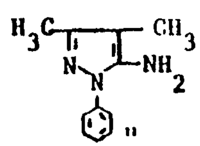 | $CH_3$ | $CH_3$ | " | " | " |
| 75 | " | " | " | $CH_3$ | " | " |
| 76 | " | " | $CH_2$- 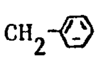 | H | " | " |
| 77 | " | 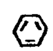 | $CH_3$ | $CH_3$ | " | " |

Tabelle II (Fortsetzung 5)

| Beispiel Nr. | Diazokomponente | Kupplungskomponente 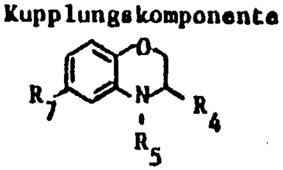 | | | Quarternierungs-mittel | Nuance auf Polyacrylnitril |
|---|---|---|---|---|---|---|
| | | $R_4$ | $R_5$ | $R_7$ | | |
| 78 | 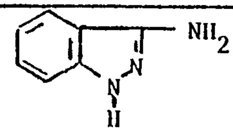 | $CH_3$ | $CH_3$ | H | $(CH_3O)_2\ SO_2$ | rotstichig-blau |
| 79 | " | " | " | $CH_3$ | " | " |
| 80 | " | " | $C_2H_5$ | H | " | " |
| 81 | " | " | $C_2H_4OH$ | " | " | " |
| 82 | " | " | $CH_3$ | $CH_3$ | $(C_2H_5O)_2\ SO_2$ | " |
| 83 | " | 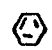 | H | H | $(CH_3O)_2\ SO_2$ | blaustichig-rot |

Beispiel 84

9 T 2-Amino-6-methoxybenzthiazol werden auf übliche Weise in Nitrosylschwefelsäure diazotiert. Diese Diazolösung lässt man innert 30 Minuten bei maximal 10° auf eine lösung von 9,65 T 3-Methyl-N(2'-hydroxyäthyl)-benzomorpholin in 40 T Essigsäure 80 % tropfen. Die Kupplung erfolgt sofort. Durch Zutropfen von verdünnter Natronlauge wird der Farbstoff bei ca. pH 2 ausgefällt und abfiltriert. Durch nochmaliges Anschlämmen in verdünnter Sodalösung erhält man nach Isolation und Trocknung 14,3 T eines violetten Farbstoffes. 5 T davon werden in Toluol mit 0,7 T Magnesiumoxid verrührt und bei 80° innert 2 Stunden mit 2,1 T Dimethylsulfat quarterniert. Das blaue Farbsalz wird mit 1 N Essigsäure extrahiert, klärfiltriert und durch Zugabe von Kochsalz ausgefällt. Man erhält das produkt der Formel

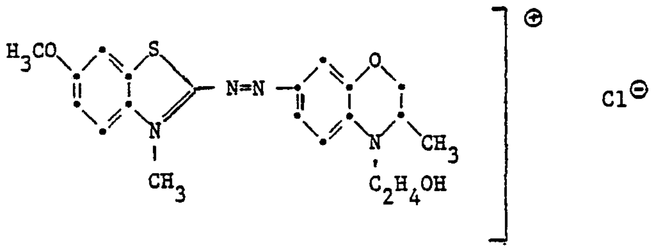

welches abfiltriert und getrocknet wird. Auf Polyacrylnitril werden reine, blaue Färbungen mit sehr guten Echtheiten erhalten.

Wenn man analog zu obigem Beispiel arbeitet, jedoch äquivalente Mengen der in Tabelle III aufgeführten Diazo- resp. Kupplungskomponenten einsetzt, erhält man weitere erfindungsgemässe Farbstoffe mit hervorragenden Echtheiten auf Polyacrylnitril.

(Siehe die Tabellen, Seiten 16, 17 und 18)

Tabelle III

| Beispiel Nr. | Diazokomponente | Kupplungskomponente 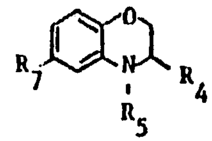 | | | Quarternierungsmittel | Nuance auf Polyacrylnitril |
|---|---|---|---|---|---|---|
| | | $R_4$ | $R_5$ | $R_7$ | | |
| 85 | 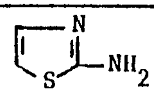 | H | H | H | $(CH_3O)_2\ SO_2$ | blaustichig-violett |
| 86 | " | $CH_3$ | " | " | " | " |
| 87 | " | " | " | $CH_3$ | " | " |
| 88 | " | " | $CH_3$ | H | " | rotstichig-blau |
| 89 | " | H | " | " | " | " |
| 90 | " | 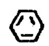 | H | " | " | blaustichig-violett |
| 91 | " | " | $CH_3$ | " | " | blau |
| 92 | " | " | $C_2H_5$ | " | $(C_2H_5O)_2\ SO_2$ | " |
| 93 | 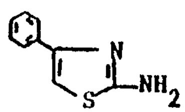 | $CH_3$ | $CH_3$ | " | " | " |
| 94 | 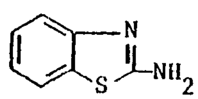 | " | " | H | $(CH_3O)_2\ SO_2$ | " |

Tabelle III (Fortsetzung 1)

| Beispiel Nr. | Diazokomponente | Kupplungskomponente 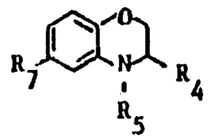 | | | Quarternierungsmittel | Nuance auf Polyacrylnitril |
|---|---|---|---|---|---|---|
| | | $R_4$ | $R_5$ | $R_7$ | | |
| 95 | 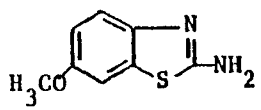 | $CH_3$ | $CH_3$ | " | " | " |
| 96 | " | " | " | $CH_3$ | " | " |
| 97 | " | " | $C_2H_4OH$ | H | " | " |
| 98 | " | " | $CH_2$-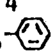 | " | " | " |
| 99 | " | 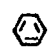 | H | H | " | rotstichig-blau |
| 100 | " | " | $CH_3$ | " | " | blau |
| 101 | " | " | $C_2H_5$ | " | " | " |
| 102 | " | " | H | $CH_3$ | " | rotstichig-blau |

Tabelle III (Fortsetzung 2)

| Beispiel Nr. | Diazokomponente | Kupplungskomponente 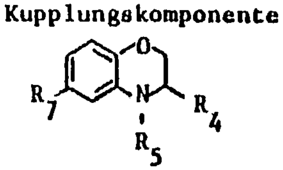 | | | Quarternierungsmittel | Nuance auf Polyacrylnitril |
|---|---|---|---|---|---|---|
| | | $R_4$ | $R_5$ | $R_7$ | | |
| 103 | 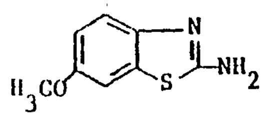 | 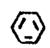 | $CH_3$ | $CH_3$ | $(CH_3O)_2\ SO_2$ | blau |
| 104 | " | " | $C_2H_4OH$ | " | " | " |
| 105 | " | " | $CH_3$ | H | 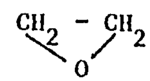 | " |
| 106 | 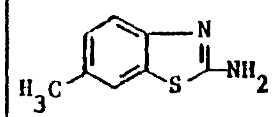 | $CH_3$ | " | " | $(CH_3O)_2\ SO_2$ | " |
| 107 | " | " | " | $CH_3$ | " | " |
| 108 | 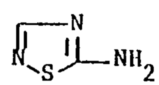 | " | " | H | " | rotstichig-blau |
| 109 | " | 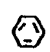 | " | " | " | " |
| 110 | " | " | " | $CH_3$ | " | " |
| 111 | " | $CH_3$ | $CH_2$- 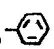 | H | " | " |

Tabelle III (Fortsetzung 3)

| Beispiel Nr. | Diazokomponente | Kupplungskomponente 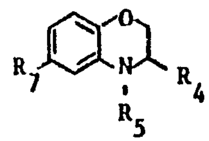 R4 | R5 | R7 | Quarternierungsmittel | Nuance auf Polyacrylnitril |
|---|---|---|---|---|---|---|
| 112 | 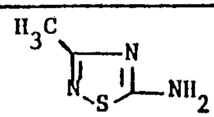 | $CH_3$ | $CH_3$ | H | $(CH_3O)_2\ SO_2$ | rotstichig-blau |
| 113 | " | 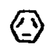 | " | " | " | " |
| 114 | " | " | " | $CH_3$ | " | " |
| 115 | " | $CH_3$ | $CH_2$- 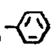 | H | " | " |
| 116 | 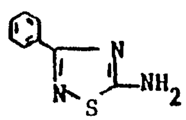 | " | $CH_3$ | " | " | " |
| 117 | " | " | " | $CH_3$ | " | " |
| 118 | " | 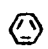 | H | " | " | " |

Beispiel 119

5 g des gemäss Beispiel 1 hergestellten Farbstoffes werden mit 2 g 40 %iger Essigsäure angeteigt und durch Zugabe von 4 000 g heissem Wasser in Lösung gebracht. Man setzt noch 1 g Natriumacetat und 2 g eines mit Dimethylsulfat quaternierten Anlagerungsproduktes von 15 bis 20 Aequivalenten Aethylenoxyd an N-Octadecyldiäthylentriamin zu und geht mit 100 g Polyacrylnitrilgewebe bei 60° ein. innerhalb 30 Minuten erhitzt man das Bad auf 100° und färbt dann kochend während 90 Minuten. Hierauf lässt man die Flotte im Verlauf von 30 Minuten bis auf 60° abkühlen. Das so gefärbte Material wird dann herausgenommen und anschliessend mit lauwarmen und kaltem Wasser gespült.

Man erhält eine reine, gelbstichig rote Polyacrylnitrilfärbung, die eine gute Lichtechtheit besitzt.

Beispiel 120

Ein Polyacrylnitril-Mischpolymerisat, bestehend aus 93 % Acrylnitril und 7 % Vinylacetat wird in Dimethylacetamid zu 15 % gelöst. Die Spinnflüssigkeit wird in ein Spinnbad extrudiert, welches aus 40 % Dimethylacetamid und 60 % Wasser besteht. Anschliessend wird das entstandene Spinnkabel nach bekannten Methoden verstreckt und durch Spülen mit heissem und kaltem Wasser vom Dimethylacetamid befreit.

Dieses nasse Spinnkabel wird durch Tauchen in einem Bad von 42° folgender Zusammensetzung gefärbt :

9 g/l Farbstoff gemäss Beispiel 1

pH 4,5 mit Essigsäure.

Die Kontaktzeit Faserkabel/Färbeflotte beträgt 2 Stunden. Anschliessend wird die überschüssige Farbflotte abgequetscht und das Spinnkabel dem Trockner zugeführt. Es resultiert ein gelbstichig rot gefärbtes Faserkabel mit guten Echtheiten.

Beispiel 121

Man bereitet eine Druckpaste, bestehend aus :

25 T des gemäss Beispiel 1 erhaltenen Farbstoffes,
30 T Thiodiglykol,
20 T Essigsäure (80 %ig),
350 T kochendem Wasser,
500 T Johannisbrotkernmehlverdickung,
30 T Weinsäure,
15 T Di-(β-cyanäthyl)-formamid und
30 T eines Naphthalinsulfonsäureformaldehyd-Kondensationsproduktes.

Ein mit dieser Druckpaste bedrucktes Polyacrylnitril-Gewebe wird danach auf einem HT-Hängeschleifendämpfer 20 bis 30 Minuten bei 101° bis 103° fixiert und wie üblich fertiggestellt. Man erhält einen gelbstichig roten Druck.

**Ansprüche**

1. Kationische Azoverbindungen der Formel I

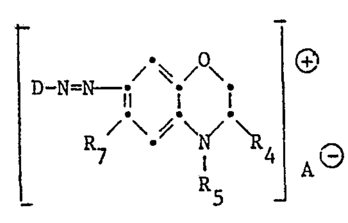

worin bedeuten :

D einen quaternierten gegebenenfalls durch $C_1$-$C_4$-Alkyl, $C_1$-$C_4$-Alkoxy oder Phenyl substituierten Pyrazol-, 1,2,4-Triazol-, Indazol-, Thiazol-, Benzothiazol- oder 1,2,4-Thiadiazolring,

$R_4$ Wasserstoff, $CH_3$, $C_2H_5$ oder Phenyl,

$R_5$ Wasserstoff, $CH_3$, $C_2H_5$, $CH_2$— 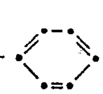 , $C_2H_4CN$ oder $C_2H_4OH$,

$R_7$ Wasserstoff oder eine Alkylgruppe mit 1 bis 4 Kohlenstoffatomen und
A ein Anion.

2. Verfahren zur Herstellung von kationischen Azoverbindungen gemäss Anspruch 1, dadurch gekennzeichnet, dass man eine Diazokomponente II

$$D'—NH_2$$

auf eine Kupplungskomponente III

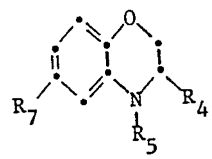

kuppelt, worin die Symbole $R_4$, $R_5$ und $R_7$ die unter Formel I angegebene Bedeutung haben, und D' den nicht quaternierten gegebenenfalls durch $C_1$-$C_4$-Alkyl, $C_1$-$C_4$-Alkoxy oder Phenyl substituierten Pyrazol-, 1,2,4-Triazol-, Indazol-, Thiazol-, Benzothiazol- oder 1,2,4-Thiadiazolring bedeutet, und das Kupplungsprodukt anschliessend gegebenenfalls alkyliert und sodann quaterniert.

3. Verwendung der kationischen Azoverbindungen gemäss Anspruch 1 als Farbstoffe zum Färben und/oder Bedrucken von Polyacrylnitrilmaterialien oder sauer modifizierten Polyamid- oder Polyestermaterialien.

4. Die mit den kationischen Azoverbindungen gemäss Anspruch 1 behandelten Materialien.

**Claims**

1. A cationic azo compound of the formula I

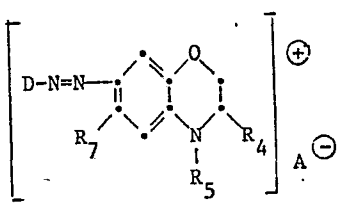

(I)

wherein

D is a quaternised pyrazole, 1,2,4-triazole, indazole, thiazole, benzothiazole or 1,2,4-thiadiazole ring, each of which is unsubstituted or is substituted by $C_1$-$C_4$-alkyl, $C_1$-$C_4$-alkoxy or phenyl,

$R_4$ is hydrogen, $CH_3$, $C_2H_5$ or phenyl,

$R_5$ is hydrogen, $CH_3$, $C_2H_5$, $CH_2$— 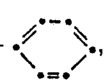, $C_2H_4CN$ or $C_2H_4OH$,

$R_7$ is hydrogen, or an alkyl group having 1 to 4 carbon atoms, and
A is an anion.

2. A process for producing a cationic azo compound according to Claim 1, which process comprises coupling a diazo component II

$$D'—NH_2$$

to a coupling component III

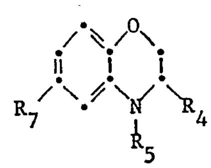

wherein the symbols $R_4$, $R_5$ and $R_7$ have the meanings given under the formula I, and D' is the non-

quaternised pyrazole, 1,2,4-triazole, indazole, thiazole, benzothiazole or 1,2,4-thiadiazole ring, each of which is unsubstituted or is substituted by $C_1$-$C_4$-alkyl, $C_1$-$C_4$-alkoxy or phenyl ; optionally alkylating the coupling product, and then performing quaternisation.

3. Use of a cationic azo compound according to Claim 1 as a dye for dyeing and/or printing polyacrylonitrile materials or acid modified polyamide or polyester materials.

4. The materials treated with a cationic azo compound according to Claim 1.

**Revendications**

1. Composés azoïques cationiques de formule I

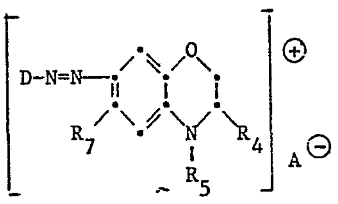

où

D représente un noyau pyrazole, 1,2,4-triazole, indazole, thiazole, benzothiazole ou 1,2,4-thiadiazole, quaternisé, éventuellement substitué par un reste alcoyle en $C_1$-$C_4$, un reste alcoxy en $C_1$-$C_4$ ou un reste phényle,

$R_4$ représente hydrogène, $CH_3$, $C_2H_5$ ou un reste phényle,

$R_5$ représente hydrogène, $CH_3$, $C_2H_5$, $CH_2$— 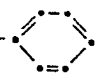, $C_2H_4CN$ ou $C_2H_4OH$,

$R_7$ représente hydrogène, ou un groupe alcoyle ayant 1 à 4 atomes de carbone et

A représente un anion.

2. Procédé de préparation de composés azoïques cationiques selon la revendication 1, caractérisé par le fait que l'on copule un constituant diazoïque II

$$D'—NH_2$$

sur un constituant de copulation III

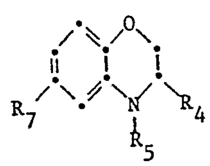

où les symboles $R_4$, $R_5$ et $R_7$ ont la signification indiquée sous la formule I, et D' représente un noyau pyrazole, 1,2,4-triazole, indazole, thiazole, benzothiazole ou 1,2,4-thiadiazole non quaternisé, éventuellement substitué par un reste alcoyle en $C_1$-$C_4$, un reste alcoxy en $C_1$-$C_4$ ou un reste phényle, et qu'éventuellement l'on alcoyle ensuite le produit de copulation et après l'on quaternise.

3. Utilisation des composés azoïques cationiques selon la revendication 1 comme colorants pour la teinture et/ou l'impression des matières en polyacrylonitrile ou des matières en polyamide ou polyester modifiées par acide.

4. Les matières traitées par les composés azoïques cationiques selon la revendication 1.